# EUROPEAN PATENT SPECIFICATION

(11) **EP 2 915 031 B1**
(45) Date of publication and mention of the grant of the patent: **13.11.2019**
(21) Application number: 13710161.4
(22) Date of filing: 25.02.2013
(51) Int. Cl.: G06F 3/0481, H04M 1/725, G06F 3/0482, G06F 3/0484

(54) **APPARATUS AND METHOD FOR DYNAMIC ACTIONS BASED ON CONTEXT**
VORRICHTUNG UND VERFAHREN FÜR DYNAMISCHE AKTIONEN AUF DER GRUNDLAGE VON KONTEXT
APPAREIL ET PROCÉDÉ POUR ACTIONS DYNAMIQUES EN FONCTION D'UN CONTEXTE

(30) Priority: 02.11.2012 US 201261721628 P
(43) Date of publication of application: 09.09.2015
(73) Proprietor: GE Intelligent Platforms, Inc., Charlottesville, VA 22911 (US)
(72) Inventor: HARDWICK, Peter, Charlottesville, VA 22911 (US); MOLDEN, Robert, Charlottesville, VA 22911 (US)
(74) Representative: Bruck, Mathis
(86) International application number: PCT/US2013/027569
(87) International publication number: WO 2014/070221

(56) References cited:
- US-A1- 2006 270 421
- US-A1- 2007 075 965
- US-A1- 2011 296 346

## Description

### Background of the Invention

### Field of the Invention

The subject matter disclosed herein relates to actions having a distinct relationship to context-sensitive information contained within an application.

### Brief Description of the Related Art

In electronic devices, users are often able to select various actions to be performed. An action itself can consist of any number of operations. Moreover, an action can trigger an operation to be performed on a set of data, launch another application, affect the current visualization (e.g., the display) or use a button that performs an operation when selected.

Previous attempts have been made to group similar actions or operations or allow customers to manually choose a configuration of operations that suits them. One previous approach to this is a mass disabling (or enabling) of groups of content.

Most existing applications seek to provide a user with access to a variety of functionality through a series of clickable buttons or icons, which are tied to a specific type of functionality. As an application grows in complexity, the numbers of buttons oftentimes become unwieldy. Others have tried to solve this problem by providing logical groupings, allowing users to manage their groupings. However, this still requires significant manual interaction and sometimes requires many user interactions just to find the correct operation to trigger. Users are never certain until they try to execute an operation whether it is applicable to the current state of their application, or whether applicable to their current data context. Particularly on a mobile device, it is desirable to keep the number of touches a user has to execute an operation to a minimum.

US 2011/296346 discloses a dynamically provided tool bar in a user interface.

US 2006/0270421 A1 refers to methods and systems for location-based services. A portable electronic device comprises an adaptable user interface. Depending on a current location of the portable electronic device, a displayed information on the user interface is changed.

The portable data processing device of US 2007/0075965 A1 comprises a proximity sensor. Depending on the sensor information of the proximity sensor, the state of the device is changed.

### Brief description of the Invention

The present invention refers to a method of dynamically creating and presenting one or more selectable graphical display icons to a user according to claim 1 and an apparatus for dynamically creating and presenting one or more selectable graphical display icons to a user according to claim 8. The approaches described herein address the problems of previous approaches by only allowing a user access to those actions which are applicable to the current visualization, the current data context, or the current program state. In other words, the present approaches make use of context sensitive information to determine those actions a user will have access to or be allowed to execute. In addition, the present approaches allow for the modification of actions based on context such that the most ideal operation for a given context is provided.

In some aspects, approaches for utilizing dynamic actions based on context sensitive information are provided. More specifically, the present approaches provide for actions having the capability to be enabled or disabled, appear or disappear, or provide for additional different operations and effects based on the current context to which they are sensitive.

In one approach for utilizing dynamic actions based on context sensitive information, the context includes application context such as a visualization being displayed within an application. In another approach, the context can include the internal state of an application. In an additional approach, the context includes hardware level information such as geospatial information.

In another approach, actions performed within a given context can be dynamically created and destroyed by the application. In still another approach, dynamic actions can also be modified by application logic at the time of running the application to allow an alternative functionality based on context sensitive information.

In other aspects, the application can be located on a mobile platform. In this and other examples, upon changing context within the application, usage and availability of different actions changes to appropriately match this new context.

In some examples, the information used for applications can be stored on a remote server. In other examples, actions may be tied to geospatial information. These actions can be triggered when a certain proximity criteria are met. Such actions may have a geofence defined by the proximity which allows for a determination of an allowable distance from an object.

These and other approaches for utilizing dynamic actions based on context specific information can provide for a greater feel of application intelligence and usability, particularly when coupled with additional geointelligence capabilities. In accordance with these and other embodiments, users are able to accomplish their desired goals and perform operations with greater efficiency while minimizing necessary user inputs when compared to traditional methods. Combining these approaches with the dynamic nature of the action functionality, the application's behavior can be dynamically modified as the application executes.

In some of these embodiments, user content is periodically received. The user content is associated with at least one portion of a mobile interface and the user content being changeable over time. The user content is automatically analyzed and one or more actions that are associated with or related to at least some portions of the user content are determined. One or more graphical display icons that are associated with the one or more actions are formed. The one or more graphical display icons are presented to a user on a display of a mobile device. One of the one or more graphical display icons are then selected on the display and the actions associated with the selected graphical display icon are performed. One or more of the actions are triggered based upon geographic proximity to another device.

In other aspects, the mobile interface is associated with a cellular phone, personal computer, or personal digital assistant. The graphical display icons are displayed on a display bar.

In some examples, the actions are executed programmatically or, alternatively, with the intervention of a user. In other examples, the actions performed are dynamically created and destroyed by an application. In yet other examples, the actions can also be modified by application logic at the time of running the application to allow an alternative functionality based on context sensitive information.

In others of these embodiments, an apparatus for dynamically creating and presenting selectable graphical display icons to a user includes an interface and a controller. The interface has an input that is configured to periodically receive user content, the user content associated with at least one portion of a mobile interface, and the user content being changeable over time.

The controller is coupled to the interface and is configured to automatically analyze the user content and determine one or more actions that are associated with or related to at least some portions of the user content. The controller is configured to form one or more graphical display icons that are associated with the one or more actions and present the one or more graphical display icons to a user at the output for displaying on a mobile device, and to trigger one or more of the actions based upon geographic proximity to another device.

### Brief description of the Drawings

For a more complete understanding of the disclosure, reference should be made to the following detailed description and accompanying drawings wherein:
FIG. 1 comprises a block diagram of a system for presenting dynamic actions to users according to various embodiments of the present invention;
FIG. 2 comprises a flow chart of an approach for presenting dynamic actions to users according to various embodiments of the present invention;
FIG. 3 comprises a flow chart of an apparatus for presenting dynamic actions to users according to various embodiments of the present invention;
FIG. 4 comprises diagrams of screen shots according to various embodiments of the present invention;
FIG. 5 comprise a block diagram showing an approach for determining icons/actions according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### Detailed Description of the Invention

In the approaches described herein, actions have the capability to be enabled or disabled, appear or disappear, or alternatively provide for different operations and effects based on the current context they are sensitive.

The term "context" includes application context such as the current visualization being displayed within the application (e.g., the current screen or web page displayed). Context also includes internal application state and history of past events. Other contexts include hardware level information such as geospatial information like GPS location as well as data and details retrieved from a server about items of interest such as equipment, sites, locations, or assets in general. Other examples are possible.

Actions to be performed in a given context can be dynamically created and destroyed by the application logic itself at runtime thus allowing for multiple variable conditions to affect the availability of an action.

Dynamic actions can also be modified by application logic, at run time to allow for a differing type of functionality based on a variety of context sensitive information.

Actions themselves can either be executed programmatically or by user interaction with any desired part of the application. Additionally, actions can be configured to execute on context changes. One example of this would be executing an action when geospatial information for a mobile device meets a certain condition such as entering within a certain proximity of an asset or leaving a certain proximity of an asset.

Actions that are availably to be triggered based upon a user's manual interaction with the application can easily be made available via any click-able region, including, but not limited to simple button clicks.

In some aspects, the mobile application utilizes an visualization mechanic called an "Action Bar". This Action Bar is a dynamically sizing, slide-able, bar of click-able buttons. The actions and buttons made available on the Action Bar are controlled primarily by context within the application visualization. One such example of this occurs when observing a list of assets' filtering and sorting options for the specific list type is available. However, when viewing a single specific asset, filtering and sorting actions behave differently and can allow for filtering the data associated with an asset such as any data which may be signaling an alarm condition.

In some aspects, upon changing context within the application, the usage and availability of the actions on the action bar changes to match the new context.

Additionally, information for actions, being closely related to context sensitive information, can be stored outside of an applicate, such as on a remote server. Upon switching contexts actions of interest can be streamed from the server based on context information the server has available.

Further, actions which are tied to geospatial information can be provided their own proximity (e.g., a distance) with which they may be triggered. In the context of a specific asset or a specific type of asset an action may exist that will either automatically execute or can be allowed to be executed based on the relationship between a devices location and the location to an asset. These actions are said to have a geofence defined by the proximity which allows for a determination of an allowable distance from an object.

All applications, but particularly mobile touch screen based applications, should provide for the quickest possible way to accomplish a desired goal. Screen real estate on a mobile device is also at a premium. For both time and visual space concerns, these approaches allow for a streamlined and dynamic method for providing a user only those operations they need access to and only those operations that are relevant based on context sensitive information of the application, visualization, server, or data.

Extending the aforementioned concepts, actions provide for a greater feel of application intelligence and usability particularly when coupled with geointelligence capabilities.

These actions allow for users to accomplish their desired goals and perform their desired operations more efficiently and with few touches (or clicks) than previous methodology. When combined with the dynamic nature of the action functionality, the behaviors of an application can also be dynamically changed as an application executes.

The present approaches allows for additional content, functionality, visualizations, and server side interactions to occur aside from what was provided for within the product when it was installed. This dynamic nature allows for adding a new visual representation for a set of data, providing for additional or more advanced analytics.

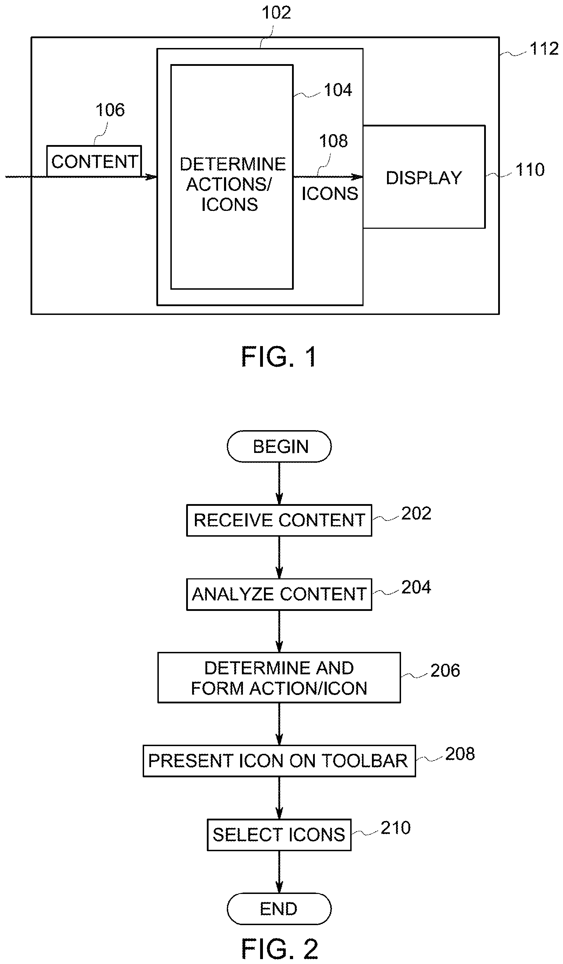

Referring now to FIG. 1, one example of a system for the creation of dynamic actions is described. A mobile application 102 includes a determine actions and icons module 104. User content 106 is received. User content 106 may be a web page, display screens, or any type of information whether intended for display or not. The determine actions and icons module 104 determines appropriate icons 108 for presentation on a display 110. The display 110 may be any type of display device. The mobile application may reside on a mobile device 112. The mobile device 112 may be an appropriate device such as a cellular phone, personal computer, personal digital assistant, pager or any other type of mobile device.

As mentioned the term "context" includes application context such as the current visualization being displayed within the application and includes the internal application state, history of past events, hardware level information (such as geospatial information like GPS location) and data and details retrieved from a server (e.g., about items of interest such as equipment, sites, locations, or assets in general).

Icons generated and actions to be performed in a given context can be dynamically created and destroyed by the mobile application 102 if at runtime thus allowing for multiple variable conditions to affect the availability of an action and can also be determined. Dynamic actions can also be modified by the mobile application 102, at run time to allow for a differing type of functionality based on a variety of context sensitive information.

Actions themselves can either be executed programmatically or by user interaction with any desired part of the mobile application 102. Additionally, actions can be configured to execute on context changes. For instance an action can be executed when geospatial information for the mobile device 112 meets a certain condition such as entering within a certain proximity of an asset or leaving a certain proximity of an asset (e.g., any electronic device or object that can be tagged with location information).

Actions that are available to be triggered based on a user's manual interaction with the application 102 can easily be made available via any click-able region, including, but not limited to simple button clicks on an action bar on the display 110.

Additionally, pull-down menus may also be used. If an action bar is used, the Action Bar is a dynamically sizing, slide-able, bar of click-able buttons or other icons. The actions and buttons made available on the Action Bar are controlled by context within the application visualization. One such example of this occurs when observing a list of assets' filtering and sorting options for the specific list type is available. However, when viewing a single specific asset, filtering and sorting actions behave differently and can allow for filtering the data associated with an asset such as any data which may be signaling an alarm condition. Upon changing context within the mobile application 102, the usage and availability of the actions on the action bar changes to match the new context.

Information for actions, being closely related to context sensitive information, can be stored outside of an applicate, such as on a remote server. Upon switching contexts actions of interest can be streamed from the server based on context information the server has available.

Actions which are tied to geospatial information can be provided their own proximity with which they may be triggered. In the context of a specific asset (e.g., an electronic device) or a specific type of asset an action may exist that will either automatically execute or can be allowed to be executed based on the relationship between a devices location and the location to an asset. In one aspect, a geofence defined is by the proximity to an asset. When this geofence is detected by the mobile application 102, it changes the context and appropriate icons are selected.

Referring now to FIG. 2, one approach for the dynamic display of actions is described. At step 202, user content is periodically received. The user content is associated with at least one portion of a mobile interface and the user content is changeable over time. At step 204, the user content is automatically analyzed and at step 206 one or more actions that are associated with or related to at least some portions of the user content are determined and one or more graphical display icons that are associated with the one or more actions are formed. In some examples, the actions are executed programmatically or with the intervention of a user. In other examples, the actions performed are dynamically created and destroyed by an application. In yet other examples, the actions can also be modified by application logic at the time of running the application to allow an alternative functionality based on context sensitive information. It will be appreciated that other context information besides user contact can be used to determine the actions and icons.

At step 208, the one or more graphical display icons are presented to a user on a display of a mobile device. In other aspects, the mobile interface is associated with a cellular phone, personal computer, or personal digital assistant. At step 210, one of the one or more graphical display icons are selected on the display and the actions associated with the selected graphical display icon are performed. In some examples, graphical display icons are displayed on a display bar. In other examples, the icons are part of a pull-down menu. In still other aspects, actions are determined based upon geographic proximity to another device.

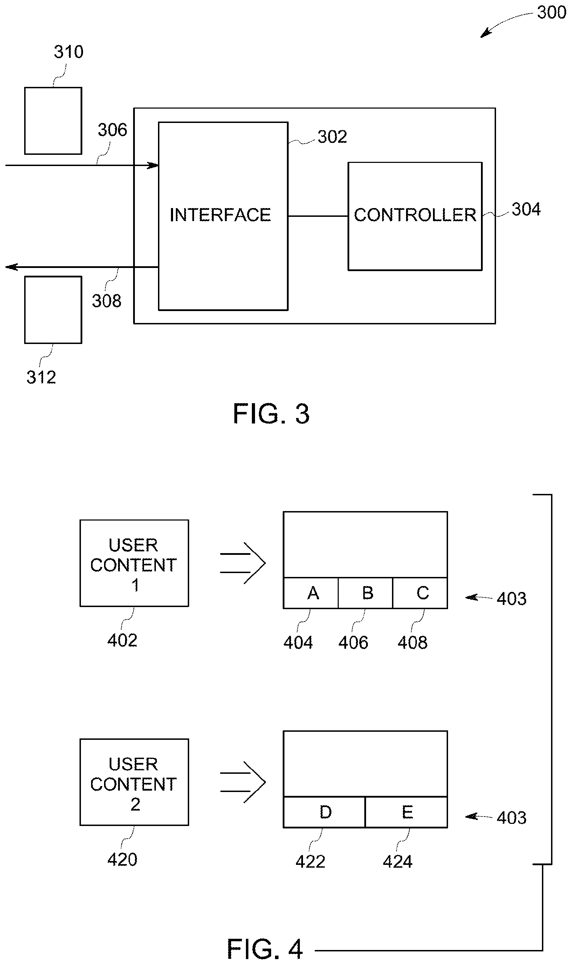

Referring now to FIG. 3, an apparatus 300 for dynamically creating and presenting selectable graphical display icons to a user includes an interface 302 and a controller 304. The interface 302 has an input 306 that is configured to periodically receive user content 310, the user content 310 being associated with at least one portion of a mobile interface, and the user content 310 being changeable over time. The interface 302 also has an output 308.

The controller 304 is coupled to the interface 302 and is configured to automatically analyze the user content 310 and determine one or more actions that are associated with or related to at least some portions of the user content. The controller 304 is configured to form one or more graphical display icons 312 that are associated with the one or more actions and present the one or more graphical display icons 312 to a user at the output for displaying on a mobile device.

The controller 304 is any programmed processing device such as a microprocessor or the like. The interface 302 can be implemented as any combination of programmed software and hardware.

Referring now to FIG. 4, one example of display screens with dynamic actions is described. First user content 402 causes the display on a bar 403 of icons 404, 406, and 408. Second user content 420 causes the display on the bar 403 of different icons 422 and 424. It will be appreciated that the display bar is one example of a display mechanism and that other examples (e.g., a pull-down menu) are possible.

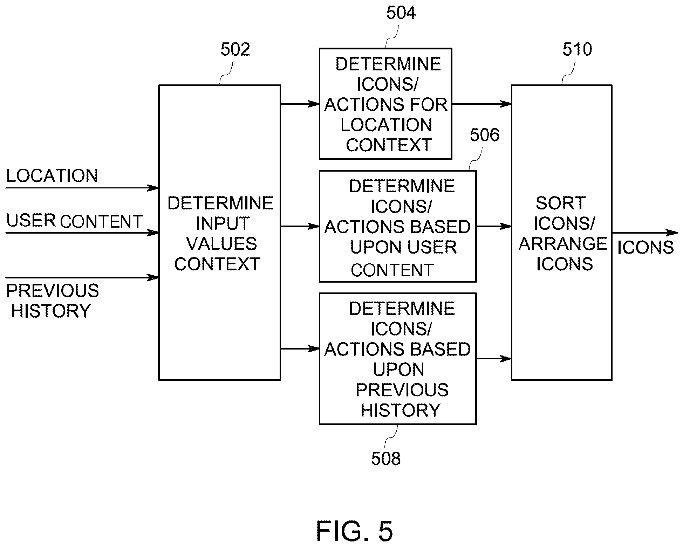

Referring now to FIG. 5, one example of an approach for determining actions and associated icons is described. The approach may be implemented as several programmed software modules. The modules include a determine input values context module 502, a determine icons/actions for location context module 504, a determine icons/actions based upon user context module 506, a determine actions/icons based upon previous history module 508, and a sort icons/arrange icons module 510.

Each of the modules 504, 506, 508 determine actions/icons based upon a specific context. The determine icons/actions for location context module 504 determines actions/icons based on the location data; the determine icons/actions based upon user content module 506 makes a determination based upon user content; and the determine icons/actions based upon previous history module 508 makes a determination based upon previous history. It will be appreciated that these are examples only of context and that a single context or other contexts may be used.

The modules 504, 506, and 508 receive the information, analyze the information, based upon the analysis, determine one or more actions, and associate the actions with icons (or any other displayable image or images). For instance, location information may be analyzed to determine assets near the mobile device. User context (e.g., web pages) may be analyzed (using any appropriate software technique) to determine content. Once analyzed, particular actions are determined. For instance, a certain content may require a certain action. Then, icons (or other displayable images) are associated with these actions.

The sort icons/arrange icons module 510 sorts and/or arranges the icons. For instance, some images may be duplicative. Other icons may need to be displayed on an action bar, and other icons on a drop-down menu. In any case, the icons are then presented for display.

## Claims

1. A method (200) of dynamically creating and presenting one or more selectable graphical display icons to a user of a mobile device (112), the method comprising the steps of:
periodically receiving (202) user content (310) the user content (310) being changeable over time;
automatically analyzing (204) the user content (310) and determining one or more actions that depend from at least some portions of the user content (106);
forming (206) one or more selectable graphical display icons (312) that are associated with the one or more actions to be performed when the respective icon is selected; and
presenting (208) the one or more selectable graphical display icons (312) to a user on a display (110) of a mobile device (112);
**characterised in that** the step of forming (206) of the one or more selectable graphical display icons (312) further comprises the steps of:
determining location data, a user content and previous history by a determine input values context module (502);
determining icons based upon the location data by a determine icons/actions for location context module (504);
determining icons based upon user content by a determine icons/actions based upon user content module (506);
determining icons based upon previous history by a determine icons/actions based upon previous history module (508);
sorting and/or arranging the icons determined by the determine icons/actions for location context module (504), the determine icons/actions based upon user content module (506) and the determine icons/actions based upon previous history module (508) by a sort icons/arrange icons module (510).

2. The method of claim 1, further comprising the steps of selecting one of the one or more selectable graphical display icons (312) on the display (110) and performing the one or more actions associated with the selected graphical display icon (312).

3. The method of claim 1 or 2, wherein the mobile device (112) is a cellular phone, personal computer, or personal digital assistant.

4. The method of any of claims 1 to 3, wherein the one or more selectable graphical display icons (312) are displayed on a display bar (403).

5. The method of any preceding claim, wherein the one or more actions are executed programmatically or with the intervention of a user.

6. The method of any preceding claim, wherein the actions performed are dynamically created and destroyed by an application.

7. The method of any preceding claim, wherein the one or more actions are modified by application logic at the time of running the application (102) to allow an alternative functionality based on context sensitive information.

8. An apparatus for dynamically creating and presenting one or more selectable graphical display icons (312) to a user of a mobile device (112), the apparatus comprising:
an interface (302), the interface (302) having an input that is configured to periodically receive user content (310) displayed on a display (110) of the mobile device (112), the user content (310) associated with at least one portion of a mobile interface (302), the user content (310) being changeable over time; and
a controller (304) coupled to the interface (302), the controller (304) being configured to:
automatically analyze the user content (310) and determine one or more actions that are associated with or related to at least some portions of the user content (310);
form one or more selectable graphical display icons (312) that are associated with the one or more actions to be performed when the respective icon is selected; and
present the one or more selectable graphical display icons (312) to a user at the output for displaying on a mobile device (112);
**characterised in that** the controller (304) being configured to form the one or more selectable graphical display icons (312) by: determining location data, a user content and previous history by a determine input values context module (502);
determining icons based on the location data by a determine icons/actions for location context module (504);
determining icons based upon user content by a determine icons/actions based upon user content module (506);
determining icons based upon previous history by a determine icons/actions based upon previous history module (508);
sorting and/or arranging the icons determined by the determine icons/actions for location context module (504), the determine icons/actions based upon user content module (506) and the determine icons/actions based upon previous history module (508) by a sort icons/arrange icons module (510).

9. The apparatus of claim 8, wherein the controller is further configured to determine that one of the one or more selectable graphical display icons (312) on the display has been selected, and to perform the one or more actions associated with the selected graphical display icon.

10. The apparatus of claim 8 or 9, wherein the mobile device (112) is a cellular phone, personal computer, or personal digital assistant.

11. The apparatus of any of claims 8 to 10, wherein the one or more selectable graphical display icons (312) are configured to be displayed on a display bar (402).

12. The apparatus of any of claims 8 to 11, wherein the one or more actions are executed programmatically or with the intervention of a user.

13. The apparatus of any of claims 8 to 12, wherein the controller (304) is configured to modify the actions by application logic at the time of running the application (102) to allow an alternative functionality based on context sensitive information.

## Patentansprüche

1. Verfahren (200) zum dynamischen Erzeugen und Darbieten eines oder mehrerer wählbarer grafischer Anzeigesymbole an einen Benutzer einer mobilen Vorrichtung (110), wobei das Verfahren die folgenden Schritte umfasst:
periodisches Empfangen (202) von Benutzerinhalten (312), wobei der Benutzerinhalt (310) im Laufe der Zeit veränderbar ist;
automatisches Analysieren (204) des Benutzerinhalts (310) und Bestimmen einer oder mehrerer Aktionen, die von mindestens einigen Abschnitten des Benutzerinhalts (106) abhängen;
Bilden (206) eines oder mehrerer wählbarer grafischer Anzeigesymbole (312), die mit einer oder mehreren Aktionen verbunden sind, die bei Auswahl des jeweiligen Symbols auszuführen sind; und
Darbieten (208) des einen oder der mehreren wählbaren grafischen Anzeigesymbole (312) an einen Benutzer auf einem Display (110) einer mobilen Vorrichtung (112);
**dadurch gekennzeichnet, dass** der Schritt des Bildens (206) des einen oder der mehreren wählbaren grafischen Anzeigesymbole (312) ferner die folgenden Schritte umfasst:
Bestimmen von Standortdaten, einem Benutzerinhalt und einer Vorgeschichte durch ein Modul zum Bestimmen von Eingangswertkontext (502);
Bestimmen von Symbolen basierend auf den Standortdaten durch ein Modul zum Bestimmen von Symbolen/Aktionen für Standortkontext (504);
Bestimmen von Symbolen basierend auf Benutzerinhalten durch ein Modul zum Bestimmen von Symbolen/Aktionen basierend auf Benutzerinhalten (506);
Bestimmen von Symbolen basierend auf der Vorgeschichte durch ein Modul zum Bestimmen von Symbolen/Aktionen basierend auf der Vorgeschichte (508);
Sortieren und/oder Anordnen der Symbole, die durch das Modul zum Bestimmen von Symbolen/Aktionen für Standortkontext (504), das Modul zum Bestimmen von Symbolen/Aktionen basierend auf Benutzerinhalten (506) und das Modul zum Bestimmen von Symbolen/Aktionen basierend auf der Vorgeschichte (508) bestimmt wurden, durch ein Modul (510) zum Sortieren von Symbolen/Anordnen von Symbolen.

2. Verfahren nach Anspruch 1, ferner umfassend die Schritte des Auswählens eines des einen oder der mehreren wählbaren grafischen Anzeigesymbole (312) auf dem Display (110) und des Durchführens der einen oder mehreren Aktionen, die mit dem ausgewählten grafischen Anzeigesymbol (312) verbunden sind.

3. Verfahren nach Anspruch 1 oder 2, wobei die mobile Vorrichtung (112) ein Mobiltelefon, ein Personalcomputer oder ein persönlicher digitaler Assistent ist.

4. Verfahren nach einem der Ansprüche 1 bis 3, wobei das eine oder die mehreren wählbaren grafischen Anzeigesymbole (312) auf einer Anzeigeleiste (403) angezeigt werden.

5. Verfahren nach einem vorhergehenden Anspruch, wobei die eine oder mehreren Aktionen programmgesteuert oder mit Eingreifen eines Benutzers ausgeführt werden.

6. Verfahren nach einem vorhergehenden Anspruch, wobei die ausgeführten Aktionen durch eine Anwendung dynamisch erzeugt und vernichtet werden.

7. Verfahren nach einem vorhergehenden Anspruch, wobei die eine oder mehreren Aktionen durch die Anwendungslogik zum Zeitpunkt des Ausführens der Anwendung (102) geändert werden, um eine alternative Funktionalität basierend auf kontextsensitiven Informationen zu ermöglichen.

8. Vorrichtung zum dynamischen Erzeugen und Darbieten eines oder mehrerer wählbarer grafischer Anzeigesymbole (312) an einen Benutzer einer mobilen Vorrichtung (112), wobei die Vorrichtung umfasst:
eine Schnittstelle (302), wobei die Schnittstelle (302) einen Eingang aufweist, der dazu eingerichtet ist, periodisch Benutzerinhalte (310) zu empfangen, die auf einem Display (110) der mobilen Vorrichtung (112) angezeigt werden, wobei der Benutzerinhalt (310) mindestens einem Abschnitt einer mobilen Schnittstelle (302) zugeordnet ist und der Benutzerinhalt (310) im Laufe der Zeit veränderbar ist; und
eine Steuerung (304), die mit der Schnittstelle (302) gekoppelt ist, wobei die Steuerung (304) dazu eingerichtet ist:
automatisch den Benutzerinhalt (308) zu analysieren und eine oder mehrere Aktionen zu bestimmen, die mit mindestens einigen Abschnitten des Benutzerinhalts (308) verbunden sind oder damit zusammenhängen;
ein oder mehrere wählbare grafische Anzeigesymbole (312) zu bilden, die mit einer oder mehreren Aktionen verbunden sind, die bei Auswahl des jeweiligen Symbols auszuführen sind; und
das eine oder die mehreren wählbaren grafischen Anzeigesymbole (312) einem Benutzer am Ausgang zum Anzeigen auf einer mobilen Vorrichtung (112) darzubieten;
**dadurch gekennzeichnet, dass** die Steuerung (304) dazu eingerichtet ist, ein oder mehrere wählbare grafische Anzeigesymbole (312) zu bilden durch: Bestimmen von Standortdaten, einem Benutzerinhalt und einer Vorgeschichte durch ein Modul zum Bestimmen von Eingangswertkontext (502);
Bestimmen von Symbolen basierend auf den Standortdaten durch ein Modul zum Bestimmen von Symbolen/Aktionen für Standortkontext (504);
Bestimmen von Symbolen basierend auf Benutzerinhalten durch ein Modul zum Bestimmen von Symbolen/Aktionen basierend auf Benutzerinhalten (506);
Bestimmen von Symbolen basierend auf der Vorgeschichte durch ein Modul zum Bestimmen von Symbolen/Aktionen basierend auf der Vorgeschichte (508);
Sortieren und/oder Anordnen der Symbole, die durch das Modul zum Bestimmen von Symbolen/Aktionen für Standortkontext (504), das Modul zum Bestimmen von Symbolen/Aktionen basierend auf Benutzerinhalten (506) und das Modul zum Bestimmen von Symbolen/Aktionen basierend auf der Vorgeschichte (508) bestimmt wurden, durch ein Modul (510) zum Sortieren von Symbolen/Anordnen von Symbolen.

9. Vorrichtung nach Anspruch 8, wobei die Steuerung ferner dazu eingerichtet ist, zu bestimmen, dass eines des einen oder der mehreren wählbaren grafischen Anzeigesymbole (312) auf dem Display ausgewählt wurde, und die eine oder die mehreren Aktionen auszuführen, die mit dem ausgewählten grafischen Anzeigesymbol verbunden sind.

10. Vorrichtung nach Anspruch 8 oder 9, wobei die mobile Vorrichtung (112) ein Mobiltelefon, ein Personalcomputer oder ein persönlicher digitaler Assistent ist.

11. Vorrichtung nach einem der Ansprüche 8 bis 10, wobei das eine oder die mehreren wählbaren grafischen Anzeigesymbole (312) dazu eingerichtet sind, auf einer Anzeigeleiste (402) angezeigt zu werden.

12. Vorrichtung nach einem der Ansprüche 8 bis 11, wobei die eine oder mehreren Aktionen programmgesteuert oder mit Eingreifen eines Benutzers ausgeführt werden.

13. Vorrichtung nach einem der Ansprüche 8 bis 12, wobei die Steuerung (304) dazu eingerichtet ist, die Aktionen durch die Anwendungslogik zum Zeitpunkt des Ausführens der Anwendung (102) zu ändern, um eine alternative Funktionalität basierend auf kontextsensitiven Informationen zu ermöglichen.

## Revendications

1. Procédé (200) de création et présentation dynamiques d'une ou plusieurs icônes d'affichage graphique sélectionnables à un utilisateur d'un dispositif mobile (112), le procédé comprenant les étapes de :
réception périodique (202) d'un contenu utilisateur (310), le contenu utilisateur (310) étant modifiable dans le temps ;
analyse automatique (204) du contenu utilisateur (310) et détermination d'une ou plusieurs actions qui dépendent d'au moins certaines parties du contenu utilisateur (106) ;
formation (206) d'une ou plusieurs icônes d'affichage graphique sélectionnables (312) qui sont associées à l'action ou aux actions à effectuer quand l'icône respective est sélectionnée ; et
présentation (208) de l'icône ou des icônes d'affichage graphique sélectionnables (312) à un utilisateur sur un écran (110) d'un dispositif mobile (112) ;
**caractérisé en ce que** l'étape de formation (206) de l'icône ou des icônes d'affichage graphique sélectionnables (312) comprend en outre les étapes de :
détermination de données d'emplacement, d'un contenu utilisateur et d'un historique antérieur par un module de détermination de contexte de valeurs d'entrée (502) ;
détermination d'icônes sur la base des données d'emplacement par un module de détermination d'icônes/actions pour le contexte d'emplacement (504) ;
détermination d'icônes sur la base d'un contenu utilisateur par un module de détermination d'icônes/ actions basées sur le contenu utilisateur (506) ;
détermination d'icônes sur la base d'un historique antérieur par un module de détermination d'icônes/ actions basées sur l'historique antérieur (508) ;
tri et/ou agencement des icônes déterminées par le module de détermination d'icônes/actions pour le contexte d'emplacement (504), le module de détermination d'icônes/actions basées sur le contenu utilisateur (506) et le module de détermination d'icônes/actions basées sur l'historique antérieur (508) par un module de tri d'icônes/agencement d'icônes (510).

2. Procédé de la revendication 1, comprenant en outre les étapes de sélection de l'icône ou d'une des icônes d'affichage graphique sélectionnables (312) sur l'écran (110) et réalisation de l'action ou des actions associées à l'icône d'affichage graphique sélectionnée (312).

3. Procédé de la revendication 1 ou 2, dans lequel le dispositif mobile (112) est un téléphone cellulaire, un ordinateur personnel, ou un assistant numérique personnel.

4. Procédé de l'une quelconque des revendications 1 à 3, dans lequel l'icône ou les icônes d'affichage graphique sélectionnables (312) sont affichées sur une barre d'affichage (403).

5. Procédé d'une quelconque revendication précédente, dans lequel l'action ou les actions sont exécutées par programmation ou avec l'intervention d'un utilisateur.

6. Procédé d'une quelconque revendication précédente, dans lequel les actions effectuées sont créées et détruites dynamiquement par une application.

7. Procédé d'une quelconque revendication précédente, dans lequel l'action ou les actions sont modifiées par une logique d'application au moment de l'exécution de l'application (102) pour activer une fonctionnalité alternative basée sur des informations sensibles au contexte.

8. Appareil destiné à créer et présenter dynamiquement une ou plusieurs icônes d'affichage graphique sélectionnables (312) à un utilisateur d'un dispositif mobile (112), l'appareil comprenant :
une interface (302), l'interface (302) ayant une entrée qui est configurée pour recevoir périodiquement un contenu utilisateur (310) affiché sur un écran (110) du dispositif mobile (112), le contenu utilisateur (310) étant associé à au moins une partie d'une interface mobile (302), le contenu utilisateur (310) étant modifiable dans le temps ; et
un contrôleur (304) couplé à l'interface (302), le contrôleur (304) étant configuré pour :
analyser automatiquement le contenu utilisateur (308) et déterminer une ou plusieurs actions qui sont associées ou relatives à au moins certaines parties du contenu utilisateur (308) ;
former une ou plusieurs icônes d'affichage graphique sélectionnables (312) qui sont associées à l'action ou aux actions à effectuer quand l'icône respective est sélectionnée ; et
présenter l'icône ou les icônes d'affichage graphique sélectionnables (312) à un utilisateur à la sortie pour affichage sur un dispositif mobile (112) ;
**caractérisé en ce que** le contrôleur (304) est configuré pour former l'icône ou les icônes d'affichage graphique sélectionnables (312) : en déterminant des données d'emplacement, un contenu utilisateur et un historique antérieur par un module de détermination de contexte de valeurs d'entrée (502) ;
en déterminant des icônes sur la base des données d'emplacement par un module de détermination d'icônes/ actions pour le contexte d'emplacement (504) ;
en déterminant des icônes sur la base d'un contenu utilisateur par un module de détermination d'icônes/ actions basées sur le contenu utilisateur (506) ;
en déterminant des icônes sur la base d'un historique antérieur par un module de détermination d'icônes/actions basées sur l'historique antérieur (508) ;
en triant et/ou en agençant les icônes déterminées par le module de détermination d'icônes/actions pour le contexte d'emplacement (504), le module de détermination d'icônes/actions basées sur le contenu utilisateur (506) et le module de détermination d'icônes/actions basées sur l'historique antérieur (508) par un module de tri d'icônes/agencement d'icônes (510).

9. Appareil de la revendication 8, dans lequel le contrôleur est également configuré pour déterminer que l'icône ou une des icônes d'affichage graphique sélectionnables (312) sur l'écran a été sélectionnée, et pour effectuer l'action ou les actions associées à l'icône d'affichage graphique sélectionnée.

10. Appareil de la revendication 8 ou 9, dans lequel le dispositif mobile (112) est un téléphone cellulaire, un ordinateur personnel, ou un assistant numérique personnel.

11. Appareil de l'une quelconque des revendications 8 à 10, dans lequel l'icône ou les icônes d'affichage graphique sélectionnables (312) sont configurées pour être affichées sur une barre d'affichage (402).

12. Appareil de l'une quelconque des revendications 8 à 11, dans lequel l'action ou les actions sont exécutées par programmation ou avec l'intervention d'un utilisateur.

13. Appareil de l'une quelconque des revendications 8 à 12, dans lequel le contrôleur (304) est configuré pour modifier les actions par une logique d'application au moment de l'exécution de l'application (102) pour activer une fonctionnalité alternative basée sur des informations sensibles au contexte.
